Europäisches Patentamt

European Patent Office

Office européen des brevets

(11) Veröffentlichungsnummer: **0 338 422**
**A2**

(12) **EUROPÄISCHE PATENTANMELDUNG**

(21) Anmeldenummer: **89106590.6**

(22) Anmeldetag: **13.04.89**

(51) Int. Cl.⁴: **H02K 15/06**

(30) Priorität: **16.04.88 DE 3812726**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Veser, Franz**
**Kanalstrasse 16**
**D-7980 Ravensburg(DE)**

(72) Erfinder: **Veser, Franz**
**Kanalstrasse 16**
**D-7980 Ravensburg(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) Verfahren, Übertragerwerkzeug, Stosswerkzeug und Abdeckstreifenmagazin zum Einziehen von Spulen in Statoren von Elektromotoren.

(57) Ein Verfahren zum Einziehen von Spulen (2) in Statoren von Elektromotoren unter Verwendung eines Einbringwerkzeuges (4), bestehend aus Einbringleisten (6, 7), einer Traganordnung (5) und einem Schaft (16), sowie unter Verwendung eines Stoßwerkzeuges (21) mit einem Rohrschaft (20) wird verbessert. Das Ziel, die Spulen (2) leichter und schneller einziehen zu können, wird dadurch erreicht, daß diese extrem flach geformt in die Gabeln (17) eines Übertragerwerkzeugs eingesetzt und mittels des Stoßwerkzeugs (21) aus den Gabeln (17) heraus in die Einbringleisten (6, 7) hinein verschoben werden. Das Stoßwerkzeug (21) ist durch eine besondere Spulenhalterung (23, 24) und eine Abdeckplatte (25) verbessert. Auch das Einbringen der Abdeckstreifen wird mit Hilfe eines Abdeckstreifenmagazins mit Führungen, die vorher an anderer Stelle gefüllt werden, wesentlich beschleunigt. Durch die Verwendung gleichartiger, jedoch größenmäßig gestufter Traganordnungen (5) für das Einbringwerkzeug (4), das Übertragerwerkzeug und das Abdeckstreifenmagazin wird die Lagerhaltung verringert (Hierzu Zeichnung).

FIG. 9

## Verfahren, Übertragerwerkzeug, Stoßwerkzeug und Abdeckstreifenmagazin zum Einziehen von Spulen in Statoren von Elektromotoren

Die Erfindung betrifft ein Verfahren zum Einziehen von Spulen in Statoren von Elektromotoren unter Verwendung eines Einbringwerkzeuges, bestehend aus Einbringleisten, die jeweils zwei sich elastisch voneinander spreizende Zungen aufweisen und polrichtig angeordnet in eine scheibenförmige Traganordnung eingesetzt sind, welche einen koaxialen Schaft aufweist, sowie unter Verwendung eines Stoßwerkzeuges, welches auf einem auf dem Schaft verschiebbaren Rohrschaft fixiert ist und an den Spulenköpfen angreift, wobei der mit einer Nutenisolierung versehene Stator durch eine Einspannvorrichtung fixiert ist.

Ein Verfahren dieser Art ist aus der deutschen Patentschrift 34 09 684 bekannt. Hiervon ist auszugehen mit der Maßgabe, daß als Einbringleisten solche aus Kunststoff mit metallenen Führungslamellen verwendet werden, wie sie in dem deutschen Patent 35 01 879 beschrieben sind.

Nach diesem bekannten Verfahren wird das Einbringwerkzeug mit den noch leeren Einbringleisten zunächst ein Stück weit in den vertikal stehenden Stator eingeführt. Sodann werden die einzuziehenden Spulen zwischen die gespreizten Zungenspitzen der somit fixierten Einbringleisten eingefädelt. Das verwendete Stoßwerkzeug hat radiale Mitnehmerarme, die sich mit ihrer radialflächigen oder leicht gegenüber der Radialebene abgeschrägten Frontseite an den Spulenköpfen anlegen.

Es hat sich gezeigt, daß die freihändig in die Einbringleisten eingehängten Spulen beim Einziehen einer immer noch zu großen Druckbelastung unterworfen sind. Während einerseits die Spulenseiten nur dann durch den schmalen Spalt zwischen den Führungslamellen der Zungen der Einbringleisten gezogen werden können, wenn sich die Drähte zu einem insgesamt sehr flachen Querschnitt ordnen, bewirken die Mitnehmerarme des Stoßwerkzeuges eine Verbreiterung bzw. Verdikkung des Kupferquerschnitts der Spulenseiten, so daß sich ein Stau ergibt. Die tatsächliche lichte Schlitzbreite zwischen den Führungslamellen ist angesichts der - wenn auch geringen - Dicke der Führungslamellen noch kleiner als die Nutenschlitzbreite. Es sind daher bisher sehr hohe Einziehkräfte erforderlich, insbesondere wenn eine Mehrzahl Spulen gleichzeitig eingezogen wird. Vor allem aber sind durch die hohen Walk- und Reibungskräfte, denen die Spulendrähte ausgesetzt sind, immer wieder Verletzungen der Lackisolierung aufgetreten.

Der Erfindung liegt die Aufgabe zugrunde, das Spuleneinziehen zu erleichtern und den hierfür erforderlichen Zeitaufwand zu senken sowie Beschädigungen der Spulen noch besser zu vermeiden.

Diese Aufgabe wird erfindungsgemäß durch die kennzeichnenden Verfahrensschritte des Anspruchs 1 gelöst. Damit wird den bisher verwendeten Werkzeugen ein Übertragerwerkzeug hinzugefügt, welches durch die lange und schmale Form seiner Übertragergabeln die Flachform der Spulen, d. h. einen langgestreckten schmalen Gesamt-Kupferquerschnitt zumindest der Spulenseiten parallel zur Wickelachse, erzwingt. Außerdem dient das Übertragerwerkzeug zum Transport der Spulen vom Ort ihrer Herstellung auf der Wickelmaschine zum Einbringwerkzeug bzw. zum Stator. Die in einem Schub einzuziehenden Spulen werden also gemeinsam vom Übertragerwerkzeug auf das Einbringwerkzeug umgesetzt, wobei zumindest die vorbereitenden Handgriffe, nämlich das Zusammenfügen der beiden Werkzeuge außerhalb des Stators erfolgt oder zumindest erfolgen kann, wodurch dieses Zusammenstecken infolge allseitiger Zugänglichkeit erleichtert wird. Nachdem das Einbringwerkzeug dann zusammen mit dem Übertragerwerkzeug in den Stator eingesetzt ist, und zwar so, daß die Führungslamellen der Zunge noch ein wenig aus dem Stator herausragen, werden die Spulen voll in die Einbringleisten und schon ein Stück weit in die Statornuten hinein übernommen. Durch die flache Form der Spulen ist der Kraftbedarf für den Einziehvorgang erheblich geringer als bisher. Ausschuß infolge von Spulenverletzungen kommt praktisch nicht mehr vor.

Ein weiterer, nicht zu unterschätzender Vorteil der Erfindung liegt darin, daß bei der serienmäßigen Neubewicklung von Statoren der Arbeitsablauf verbessert wird und eine Gliederung in Einzelarbeiten ermöglicht indem das Wickeln und das Befüllen einer Vielzahl von Übertragerwerkzeugen als Vorbereitungsarbeiten von dem eigentlichen Einziehvorgang abgesondert werden.

Eine vorteilhafte Weiterbildung des erfindungsgemäßen Verfahrens betrifft das Einbringen der Abdeckstreifen, d. h. querschnittlich U-förmig gekanteter Isolierstoffstreifen, in die Statornuten. Es ist zwar schon bekannt, Abdeckstreifen gemeinsam und gleichzeitig mit dem Einziehen der Spulen mittels einer hinten aufsitzenden Schubplatte einzuschieben. Hierbei mußten aber die Abdeckstreifen zunächst einmal einzeln der Reihe nach angesetzt werden. Hiermit wird vorgeschlagen, daß sämtliche für einen Einziehvorgang erforderlichen Abdeckstreifen in einem vorher und an anderer Stelle gefüllten Magazin einziehfertig enthalten sind, das auf den Schaft des Einbringwerkzeuges aufgesetzt wird und mit dessen Hilfe die Abdeckstreifen gemeinsam so weit mit ihrer vorderen Partie zwischen die Führungslamellen der Einbringleisten und die Kupferfüllung der Nut eingesteckt werden, daß sie diese Anfangsstellung beibehalten.

Die weiteren Vorschläge betreffen zweckmäßige Ausbildungen der zur Durchführung des erfindungsgemäßen Verfahrens verwendbaren Werkzeuge, insbesondere des Übertragerwerkzeugs und des Abdeckstreifen-Magazins. Diese lassen sich wie das verwendete Einbringwerkzeug für Statoren mit unterschiedlichen Durchmessern, Lochzahlen und Wicklungsarten verändern und anpassen. Dazu wird vorgeschlagen, daß diese Werkzeuge aus Einzelteilen bestehen, die sich mit Hilfe einheitlicher Befestigungsmittel an untereinander gleich aufgebauten Traganordnungen befestigen lassen. Die einzelne Traganordnung, bestehend aus einer kreiszylindrischen Scheibe mit umlaufenden Bund auf der Mantelfläche, wobei an jeder Seite eine Lochscheibe angesetzt ist, entspricht der Traganordnung des bekannten Einbringwerkzeuges. Die Scheibendurchmesser und ggf. die Lochzahlen sind sinnvoll gestuft, um Statoren mit möglichst vielen unterschiedlichen Abmessungen erfassen zu können.

Wie die Einbringleisten die Bauelemente des bekannten Einbringwerkzeuges darstellen, so sind die Übertragergabeln die Bauelemente der Übertragerwerkzeuge und die Führungskanäle die Bauelemente der Abdeckschieber-Magazine. Die jeweiligen, in der Form durchgehend gleichen Befestigungsfortsätze entsprechen hinsichtlich der Form den Fußteilen der bekannten Einbringleisten. Somit bilden die genannten Werkzeuge ein System von Arbeitsmitteln, das sich durch einen außergewöhnlich breiten Anwendungsbereich und geringe Investitionskosten auszeichnet. Das zeigt sich beispielsweise daran, daß die Traganordnungen für die drei beim Bearbeiten eines Stators zusammenwirkenden Werkzeuge drei unterschiedliche Durchmesser haben, so daß also die Traganordnungen in jeder Größe nur einmal vorhanden sein müssen.

Ein wesentliches Merkmal der Übertragergabeln besteht darin, daß der Abstand der beiden zueinander parallelen Gabelzinken etwa der Nutenschlitzbreite des Stators entspricht. Dadurch werden die Spulenseiten mit einer so flachen Querschnittsform in die Einbringleisten übernommen, daß sie in dieser Form leicht und beschädigungsfrei durch die Nutenschlitze zu ziehen sind.

Außerdem trägt dazu die besondere Ausbildung des Stoßwerkzeuges entscheidend bei. Während das bekannte Stoßwerkzeug ein Zusammenschieben der aufgelockerten Querschnittsform der Spulenseiten bewirkte, zeichnet sich das hiermit vorgeschlagene Stoßwerkzeug dadurch aus, daß an einer Stoßplatte axiale Vorsprünge mit dazwischen gebildeten, an der von der Stoßplatte abgewendeten Seite offenen Schlitzen vorgesehen sind. Von diesen Schlitzen werden die flach geformten Spulenköpfe aufgenommen und vorzugsweise fest eingeschlossen. Dazu dient eine zur Stoßplatte parallele Abdeckplatte. Diese kann außerdem an ihrem Rand axiale Führungen für die Zungenenden der Einbringleisten aufweisen, was das Zusammenstecken des Übertragerwerkzeuges und des Einbringwerkzeuges erleichtert.

Die Führungskanäle der Abdeckstreifenmagazine haben vorzugsweise einen quadratischen Querschnitt und sind an den Enden abgeschrägt, so daß man die Abdeckstreifen leicht einführen kann und deren vorderes Ende voll sichtbar ist. Vorzugsweise sind die Führungskanäle wenigstens so lang wie die gespreizten Zungenabschnitte der Einbringleisten, aber wesentlich kürzer als die Abdeckstreifen. Eine zum Stator hin leicht konvergierende Anordnung der Führungskanäle erleichtert das Einführen der Abdeckstreifen.

Während es bekannt ist, die benachbarten Zungenenden benachbarter Einbringleisten durch Überstülpen einer elastischen Haube miteinander zu verbinden, wird vorgeschlagen, eine lösbare Verbindung dieser Zungenenden dadurch herbeizuführen, daß an den Außenseiten der Enden der aufgespreizten Zungenabschnitte Haftmittel angeordnet sind, z. B. am einen Zungenende ein Zäpfchen und an dem anderen Zungenende eine Aufnahmeöffnung, so daß sich eine Art Druckknopfverbindung ergibt. Die Verbindung bei gleichzeitig spitziger Form der verbundenen Zungenenden erleichtert das Einfügen zwischen die im Übertragerwerkzeug enthaltenen Spulen wesentlich. Außerdem kann zum Zwecke der axialen Führungen der vereinten Zungenenden an wenigstens einer Zunge eine zur Statorachse weisende Führungsnase angebracht sein. Diese kann mit einer keilförmigen Führungsnut an der Mantelfläche der erwähnten Abdeckplatte des Stoßwerkzeuges zusammenwirken.

Ein Ausführungsbeispiel der Erfindung wird nachfolgend anhand der Zeichnung erläutert. Im einzelnen zeigt

Fig. 1 eine räumliche Ansicht eines mit Spulen belegten Übertrager- und Stoßwerkzeuges,

Fig. 2 eine Seitenansicht einer Übertragergabel,

Fig. 3 eine Draufsicht,

Fig. 4 einen Querschnitt einer Übertragergabel,

Fig. 5 eine räumliche Ansicht eines Abdeckschiebermagazins,

Fig. 6 eine Seitenansicht eines mit nur einem Führungskanal besetzten Abdeckschiebermagazins nach Fig. 5,

Fig. 7 eine Draufsicht eines Führungskanals,

Fig. 8 einen Querschnitt VIII-VIII zweier Führungskanäle,

Fig. 9 eine Seitenansicht eines Einbringwerkzeugs mit aufgesetztem Übertragerwerkzeug und Stoßwerkzeug, letzteres im Schnitt,

Fig. 10 die Anordnung nach Fig. 9 in einer anderen Phase des Einziehvorganges und

Fig. 11 die Anordnung in einer weiteren Phase, wobei das Übertragerwerkzeug durch ein Abdeckschiebermagazin ersetzt ist.

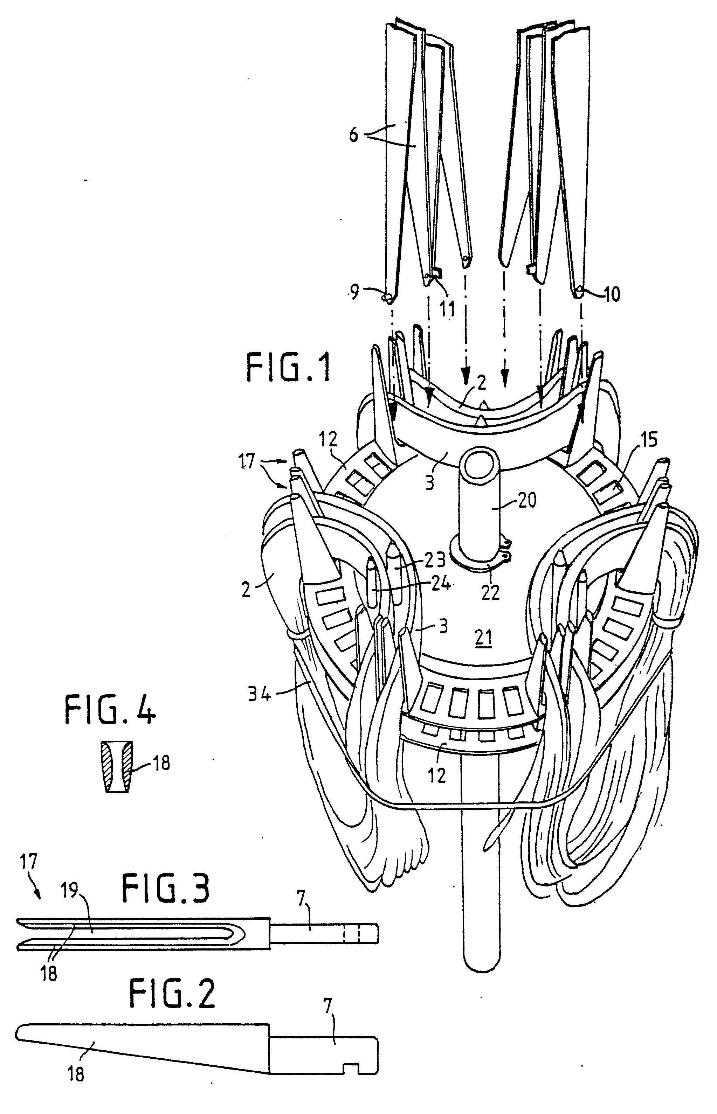

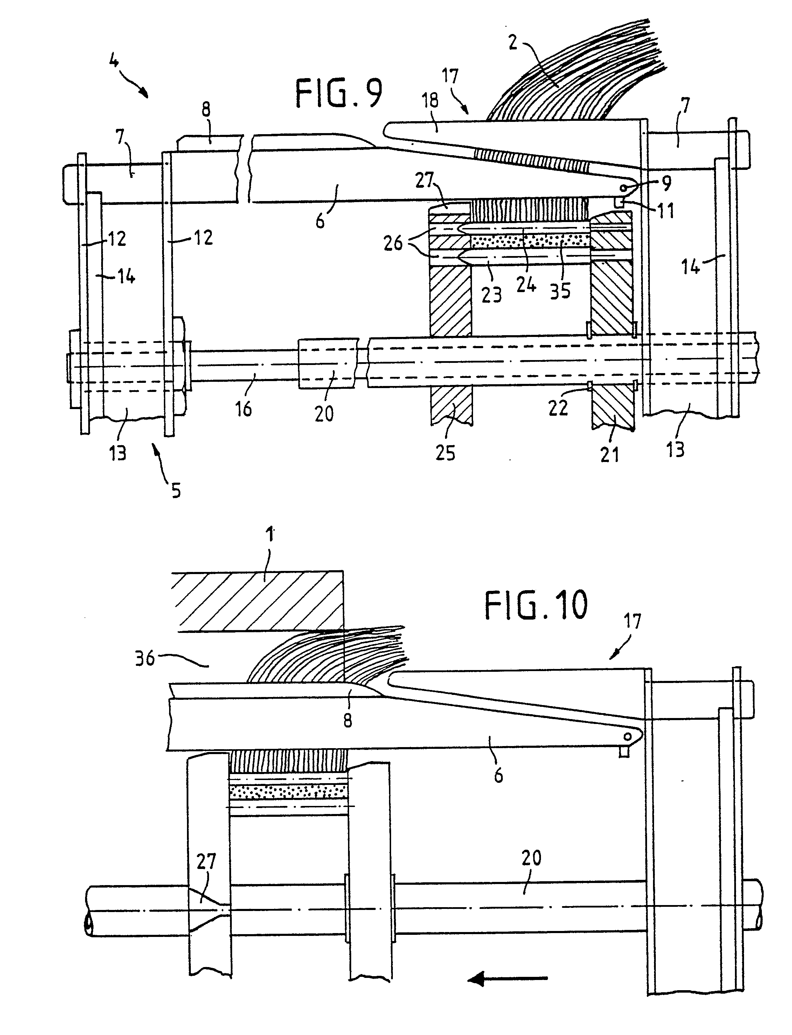

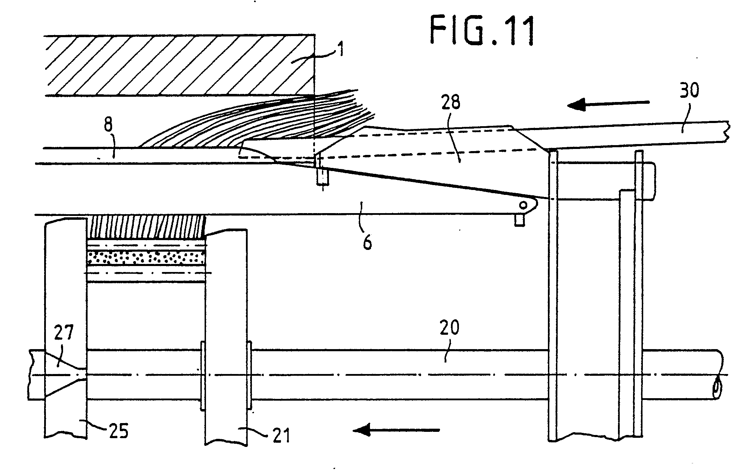

Die gezeigten Vorrichtungen dienen zum Bewickeln des Stators eines sechspoligen Drehstrommotors mit Zweilochwicklung. Der in Fig. 10 angedeutete Stator 1 hat sechsunddreißig Nuten und pro Phase drei Paare konzentrischer Spulen 2 und 3 (Figuren 1 und 9), die gemeinsam eingebracht werden.

Das prinzipiell bekannte Einbringwerkzeug 4 besteht aus einer Traganordnung 5 und einer Reihe von Einbringleisten, letztere bestehend aus zwei parallelen Zungen 6 aus einem verhältnismäßig elastischen Kunststoff, die ein gemeinsames angeformtes Fußteil 7 von rechteckigem Querschnitt aufweisen. An dem Fußteil ist eine rechteckige Quernut angebracht. In die Zungen sind Führungslamellen 8 aus einem dünnen Federstahl eingebettet. Sie erstrecken sich über den parallelen Mittelabschnitt der Zungen und legen sich abdeckend um die Zahnköpfe. Die vorderen, keilförmig zulaufenden Abschnitte der Zungen 6 sind leicht aufgespreizt (Fig. 1). An der einen Zungenspitze einer Einbringleiste befindet sich außen seitlich ein Zäpfchen 9 und an der anderen Zungenspitze ein Loch 10, so daß die aneinanderliegenden Zungenspitzen benachbarter Einbringleisten zusammengeklipst werden können. Ferner weist jede zweite Einbringleiste an einer Zungenspitze eine bezogen auf den Stator radial nach innen weisende Führungsnase 11 auf.

Die Traganordnung 5 besteht aus zwei gleichen Lochscheiben 12, die eine dickere Scheibe 13 mit einem rechteckigen Bund 14 an der Mantelfläche zwischen sich aufnehmen. Die Lochscheiben haben jeweils einen Kranz von sechsunddreißig rechteckigen Löchern 15, welche mit den Fußteilen 7 zusammenpassen. Die Fußteile werden zunächst durch die rechte Lochscheibe gesteckt und in Schräglage über den Bund 14 geschoben, so daß dieser in die Quernut einfällt. Dann wird auch die zweite Lochscheibe aufgesetzt und das Paket mittels einer Verschraubung zusammengehalten und mit einem koaxialen Schaft 16 fest verbunden. Zur Vereinfachung dieser Montage empfiehlt es sich, einen Gummiring über die Fußteile 7 zu spannen, wodurch sie bis zum Aufsetzen der zweiten Lochscheibe elastisch gehalten sind. Die Zahl und Anordnung der Einbringleisten am Lochkranz richtet sich nach dem Anwendungsfall. Im Beispiel sind zwölf Einbringleisten paarweise gleichmäßig über den Umfang verteilt angeordnet. Zur Vereinfachung der zeichnerischen Darstellung ist in den Figuren 9 bis 11 je nur eine Einbringleiste gezeigt.

Das Übertragerwerkzeug nach den Figuren 1 bis 4 besteht aus der gleichen Traganordnung 5 und aus zwölf Übertragergabeln 17, die im Druckgußverfahren aus Metall hergestellt und mit einer harten polierten Oberfläche versehen sind. Diese Übertragergabeln haben zwei parallele flache Zinken 18, die zur Spitze hin keilförmig zulaufen und innen ballig geformt bzw. an den Innenkanten abgerundet sind. Der Schlitz 19 zwischen den Gabelzinken ist etwa gleich breit wie die Nutenschlitze des Stators 1. Den Gabelstiel bildet ein Fußteil 7 gleicher Form wie bei den Einbringleisten. Die zwölf dargestellten Übertragergabeln 17 sind an der Traganordnung in gleicher Verteilung und auf gleiche Weise befestigt, wie für die Einbringleisten beschrieben. Da die Traganordnung auf einem Rohrschaft 20 verschiebbar angebracht ist, müssen hier die drei Scheiben in axialer Richtung zusammengehalten werden, was beispielsweise durch zwei Schrauben geschehen kann, die durch nichtbesetzte Löcher greifen. Zur vorübergehenden Befestigung auf dem Rohrschaft 20 kann eine die Scheibe 13 radial durchsetzende Klemmschraube vorgesehen sein.

Das Stoßwerkzeug wird unter Bezugnahme auf die Figuren 1 und 9 erläutert. Es weist eine Stoßplatte 21 auf, die mittels zweier Federringe 22 an dem erwähnten Rohrschaft 20 koaxial befestigt ist. An der oberen bzw., bezogen auf die Einziehrichtung, vorderen Seite sind insgesamt sechs angespitzte Stifte angeordnet und zwar paarweise jeweils ein dickerer Stift 23 und ein dünnerer Stift 24. Diese Stifte sitzen auf drei, jeweils um 120° winkelversetzten Radien nahe des Randes der Scheibe und erstrecken sich axial. Der Abstand der Stifte entspricht größenordungsmäßig dem Abstand der Gabelzinken 18. Auf die Stifte ist eine in Fig. 1 nicht dargestellte Abdeckplatte 25 aufgesetzt, deren Außendurchmesser dem Innendurchmesser des Einziehleistenkranzes entspricht.

Die Abdeckplatte hat sechs Löcher 26, so daß sie über die Stifte 23 und 24 gesteckt werden kann und dadurch den zwischen je zwei Stiften gebildeten Schlitz verschließt. Die Abdeckplatte dient weiter zur Führung der jeweils miteinander verbundenen Zungenspitzen der Einbringleisten und hat zu diesem Zweck auf ihrer Mantelfläche sechs sich nach vorne breit öffnende Führungsnuten 27, welche mit den Führungsnasen 11 zusammenwirken. In den Figuren 9 und 10 ist je eine solche Führungsnut 27 beispielhaft dargestellt.

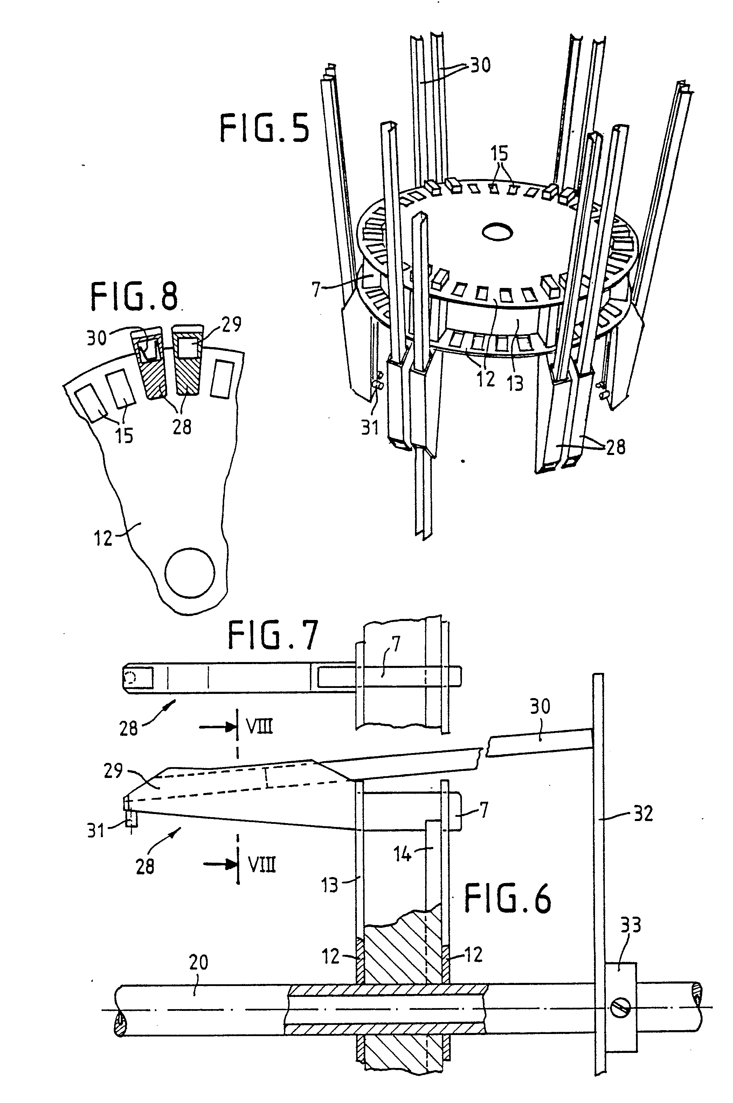

Die Figuren 5 bis 8 zeigen ein Abdeckschiebermagazin. Auch hierbei wird wieder die Traganordnung 5 verwendet, jedoch belegt mit zwölf Führungskanälen 28, die als Kunststoffspritzteile hergestellt sind. Auch diese Führungskanäle haben die gleichen Fußteile 7. Die Traganordnung läßt sich auf dem Rohrschaft 20 verschieben. Der lichte Kanalquerschnitt 29 ist quadratisch und etwa auf die Abmessungen der Abdeckschieber 30 ausgelegt. Die Kanalöffnungen sind so in die Führungskanäle 28 eingeformt, daß die eingesteckten Abdeckschieber 30 leicht zur Mittelachse der Traganordnung hin geneigt sind. Die Kanalöffnungen sind abgeschrägt. Am vorderen Ende der Führungskanäle 28 befindet sich jeweils ein zur Achse der Traganordnung hin weisender Führungsstift 31, der mit den Zungen der Einbringleisten zusammenwirkt und für das genaue Ansetzen der Führungskanäle 28 an den Statornuten von besonderer Bedeutung ist. Fig. 6 zeigt außerdem eine Schubplatte 32 mit einem Klemmbund 33, die sich ebenfalls auf dem Rohrschaft 20 befestigen läßt und deren Durchmesser so groß ist, daß sich die freien Enden des Abdeckschieberkranzes erfassen lassen.

Das Einziehen der Spulen einer Phase unter Verwendung der beschriebenen Vorrichtungen wird im folgenden zusammenhängend beschrieben. Zunächst wird das Übertragerwerkzeug nach Fig. 1 mit den Spulen bestückt. Das Stoßwerkzeug ist bereits in das Übertragerwerkzeug so eingesetzt, daß die Stoßplatte 21 an der gabelseitigen Lochscheibe 12 anliegt und winkelmäßig so orientiert ist daß die Stiftpaare 23, 24 jeweils mittig zwischen den Übertragergabelpaaren 17 stehen. Die innere Spule 2 jedes konzentrischen Spulenpaares wird in die beiden mit Abstand einander benachbarten Übertragergabeln 17 und zwischen die Stifte 23 und 24 wie aus Fig. 1 ersichtlich eingefädelt. Die Spulen haben bzw. erhalten dabei einen äußerst flachen "Band"-Querschnitt, da sie dreimal gefaßt sind. Die jeweilige Spule 3 wird in die anschließenden Übertragergabeln 17 eingefügt und um den Stift 23 herumgelegt. Es könnte auch noch ein weiterer Stift angebracht sein, so daß auch diese Spulen am Spulenkopf mittig gefaßt wären. Um zu verhindern, daß sich die Spulen beim Transport der Übertragerwerkzeuge wieder herauslösen, wird eine Abdeckscheibe 25 auf die Spulenköpfe und die Stifte aufgesteckt. Zum gleichen Zweck kann um die Spulenseiten ein Gummiband 34 herumgeschlungen werden.

Nun wird das so bestückte Übertrager- und Stoßwerkzeug mit dem Einbringwerkzeug zusammengefügt, indem der Rohrschaft 20 mit den Übertragergabeln 17 voraus auf den Schaft 16 aufgesteckt wird. Dabei fahren die zusammengeklipsten Zungenenden des Einbringwerkzeugs, wie in Fig. 1 durch Pfeile angedeutet, zwischen die Spulen 2 und 3, wobei die Führungsnasen 11 von den Führungsnuten 27 an der Abdeckplatte 25 geleitet werden, was insofern von Vorteil ist und das Zusammenfügen vereinfacht, weil die Einbringleisten eine gewisse Instabilität haben und nicht millimetergenau ausgerichtet sein können. Fig. 9 zeigt die zusammengefügten Werkzeuge, wobei zur besseren Übersichtlichkeit nur die Spule 2 gezeigt ist. Die Führungsgabeln 18 stehen radial außen über den aufgespreizten Abschnitten der Einbringleisten. Die Zungenspitzen stoßen an der vorderen Lochscheibe 12 des Übertragerwerkzeugs an. Der flache Querschnitt 35 der Spule 2 ist zwischen den Stiften 23 und 24 und den Platten 21 und 25 eingeschlossen.

Nachdem das Einbringwerkzeug in den Stator 1 so weit eingesetzt ist, daß nur noch ein kurzes Stück der Führungslamellen 8 über die Statorfrontfläche übersteht (Fig. 10), folgt die Übertragung der Spulen. Nach Lösen der Fixierung des Übertragerwerkzeugs auf dem Rohrschaft 20 führt dieser und das ganze Stoßwerkzeug einen ersten Hub in Richtung des Pfeiles aus, und zwar relativ zu dem jeweils stillstehenden Einbring- und Übertragerwerkzeug. Die mitgeführten Spulen gelangen somit nahezu reibungslos zwischen die Zungen-Mittelabschnitte der Einbringleisten und beginnen die Statornut-Innenräume 36 auszufüllen. In dieser Stellung gemäß Fig. 10 befindet sich das vordere Ende des Rohrschafts 20 nahezu am Anschlag an der Verschraubung der Traganordnung 5 des Einbringwerkzeuges. Das Übertragerwerkzeug kann nunmehr abgenommen werden.

Ein zweiter Hub, der sich auch ohne Unterbrechung an den ersten anschließen kann, bringt den Rohrschaft 20 zum Anschlag und von da ab bewegt sich das Stoßwerkzeug mit den Spulen zusammen mit dem Einbringwerkzeug relativ zum Stator 1. Diese Bewegung endet zunächst mit der Stellung nach Fig. 11. Die Spulenseiten quellen jetzt mit vollem Kupferquerschnitt aus den Statornutöffnungen heraus und die Führungslamellen 8 der Einbringleisten sind auf ganzer Länge hinter die Statorfrontfläche eingetaucht. Dies ist die Stellung zum Ansetzen der Abdeckstreifen 30. Anstelle des Übertragerwerkzeugs wird jetzt das gefüllte Abdeckstreifenmagazin auf den Rohrschaft 20 aufgesetzt bis·zum Anstoßen der Führungskanäle 28 an der Statorfrontfläche. Die Führungsstifte 31 gelangen zwischen die aufgespreizten Zungenabschnitte der Einbringleisten und werden dadurch genau mittig vor die Statornutenöffnungen geführt. Mit Hilfe der Schubplatte 32 (Fig. 6) werden jetzt die Abdeckstreifen 30 gemeinsam so weit wie möglich eingeschoben. Sie gelangen zwangsweise zwischen die vorderen Enden der Führungslamellen 8 und das Kupfer der Spulenseiten und werden dadurch eingeklemmt. Die Klemmung ist so stark, daß nach Abnahme der Schubplatte 32 auch das Abdeckstreifenmagazin weggenommen werden kann, wobei die Abdeckstreifen 30 durch die Führungskanäle 28 gleiten. Danach wird die Schubplatte 32 erneut an die freien Enden der Abdeckstreifen 30 angesetzt und auf dem Rohrschaft 20 fixiert. In einem letzten Hub wird nun der Rohrschaft 20 in Pfeilrichtung weiterbewegt, bis die sechs Spulen ganz eingezogen sind und die Spulenköpfe an der Statorrückseite frei liegen. Bei diesem letzten Hub bilden das Stoßwerkzeug, das Einbringwerkzeug, die Schubplatte 32 und die Abdeckstreifen 30 eine Einheit. Am Ende des Hubes wird zunächst das Einbringwerkzeug mit seinem zylindrischen Schaft 16 hinter dem Stator abgenommen. Ebenso wird die Abdeckplatte 25 in Schubrichtung vom Rohrschaft 20 abgezogen. Danach kann das Stoßwerkzeug mit dem Rohrschaft 20 entgegen der Schubrichtung aus dem Stator 1 herausgenommen werden, wobei die Stifte 23 und 24 die radial nach innen gebogenen Wickelköpfe freigeben.

Im Beispiel beträgt der Stator-Innendurchmesser 104 mm. Die Traganordnungen der verschiedenen Werkzeuge sind im Durchmesser gestuft, und zwar betragen die Lochscheiben-Außendurchmesser beim Einbringwerkzeug 103 mm, beim Übertragerwerkzeug 115 mm und beim Abdeckstreifenmagazin 110 mm.

Der Rohrschaft 20 wird im Beispiel, insbesondere aber bei Statoren größerer Durchmesser, mittels eines Kraftantriebs bewegt, der mit Fußschalter betätigt werden kann, so daß der Arbeiter die Hände frei hat. Bewährt haben sich elektrisch angetriebene Hubspindeln, aber auch hydraulisch oder pneumatisch betätigbare Zylinder.

In der Serienfertigung stellt das Belegen des Übertrager-und Stoßwerkzeugs einen eigenen Arbeitsvorgang dar, der vorzugsweise in räumlicher Nähe zur Wickelmaschine ausgeführt wird. Die bestückten Übertragerwerkzeuge gelangen mittels einer Förderanlage zum Einzieher. Während dieser nur mit einem Einbringwerkzeug arbeitet, ist zweckmäßigerweise eine größere Anzahl Übertrager- und Stoßwerkzeuge vorzusehen, damit der Arbeitsrythmus entkoppelt wird und eine Pufferung möglich ist. Ebenso ist das Füllen der Abdeckschiebermagazine ein eigener Arbeitsvorgang. Die gefüllten Magazine werden zugeliefert. Im Beispiel wird ein Stator mit drei Einziehvorgängen fertiggestellt, wobei zur Vermeidung von Zwangspausen je drei Übertragerwerkzeuge und Abdeckschiebermagazine vorgesehen sind.

1 Stator
2 Spule
3 Spule
4 Einbringwerkzeug
5 Traganordnung
6 Zunge
7 Fußteil
8 Führungslamelle
9 Zäpfchen
10 Loch
11 Führungsnase
12 Lochscheibe
13 Scheibe
14 Bund
15 Loch
16 Schaft
17 Übertragergabel
18 Gabelzinke
19 Schlitz
20 Rohrschaft
21 Stoßplatte
22 Federring
23 Stift, dick
24 Stift, dünn
25 Abdeckplatte
26 Loch
27 Führungsnut
28 Führungskanal
29 Kanalquerschnitt
30 Abdeckstreifen
31 Führungsstift
32 Schubplatte
33 Klemmbund
34 Gummiband
35 Spulenquerschnitt
36 Statornut-Innenraum

## Ansprüche

1. Verfahren zum Einziehen von Spulen in Statoren von Elektromotoren unter Verwendung eines Einbringwerkzeuges, bestehend aus Einbringleisten, die jeweils zwei sich elastisch voneinander spreizende Zungen aufweisen und polrichtig angeordnet in eine scheibenförmige Traganordnung eingesetzt sind, welche einen koaxialen Schaft aufweist, sowie unter Verwendung eines Stoßwerkzeuges, welches auf einem auf dem Schaft verschiebbaren Rohrschaft fixiert ist und an den Spulenköpfen angreift, wobei der mit einer Nutenisolierung versehene Stator durch eine Einspannvorrichtung fixiert ist, gekennzeichnet durch folgende Verfahrensschritte:

a) die Spulen (2, 3) werden extrem flach geformt und mit ihren Spulenseiten in gruppenweise geordnete Übertragergabeln (17) eines Übertragerwerkzeugs eingesetzt, das auf dem Rohrschaft (20) koaxial und bezogen auf die Einziehrichtung hinter dem Stoßwerkzeug (21) angeordnet ist,

b) der Rohrschaft (20) wird auf den Schaft (16) des Einbringwerkzeugs gesteckt, die Übertragergabeln (17) werden radial außen über die aufgespreizten Zungenendabschnitte der entsprechenden Einbringleisten (6, 7) gestellt, so daß die Spulenseiten zwischen diesen aufgenommen werden,

c) mittels des Stoßwerkzeuges (21) werden die Spulenseiten aus den Übertragergabeln (17) heraus und in die Einbringleisten (6, 7) und die Statornuten (36) hinein verschoben,

d) das Übertragerwerkzeug (5, 17) wird abgenommen und nach Kopplung des Stoßwerkzeuges (21) mit dem Einbringwerkzeug (6, 7) deren gemeinsame Bewegung fortgesetzt.

2. Verfahren nach Anspruch 1, wobei Abdeckstreifen (30) unter Mithilfe einer die Abdeckstreifen hinten stützenden, auf dem Rohrschaft (20) fixierten Schubplatte (32) beim Einziehen der Spulen (2, 3) miteingebracht werden, dadurch gekennzeichnet, daß sämtliche für einen Einziehvorgang erforderlichen Abdeckstreifen (30) in einem Magazin (5, 28), einziehfertig enthalten sind, das auf den Rohrschaft (20) aufgesteckt und nach anfänglichem Einklemmen der vorderen Partien der Abdeckstreifen zwischen den Führungsleisten (8) der Zungen (6) und den Wicklungsseiten wieder abgenommen wird.

3. Übertragerwerkzeug zur Durchführung des Verfahrens nach Anspruch 1, dadurch gekennzeichnet, daß eine scheibenförmige, an dem sie zentral durchsetzenden Rohrschaft (20) fixierbare Traganordnung (5) vorgesehen ist, an deren Umfang Übertragergabeln (17) mit in die gleiche axiale Richtung weisenden Gabelzinken (18) lösbar befestigt sind, wobei die Zahl und die Winkelabstände der Aufnahmestellen (15) für solche Übertragergabeln der Nutenzahl und der Nutteilung des Stators (1) entsprechen.

4. Übertragerwerkzeug nach Anspruch 3, dadurch gekennzeichnet, daß die Übertragergabeln (17) zwei zueinander parallele Gabelzinken (18) aufweisen, deren Abstand etwa der Nutenschlitzbreite des Stators (1) entspricht und deren die Wickeldrähte berührende Kanten abgerundet sind.

5. Stoßwerkzeug zur Durchführung des Verfahrens nach Anspruch 1, dadurch gekennzeichnet, daß eine mit dem sie koaxial durchsetzenden Rohrschaft (20) fest verbundene Stoßplatte (21) vorgesehen ist, die axiale Vorsprünge (23, 24) mit dazwischen gebildeten, an der von der Stoßplatte abgewendeten Seite offenen Schlitzen aufweisen, in welchen die flach geformten Spulenköpfe aufgenommen sind.

6. Stoßwekzeug nach Anspruch 5, dadurch gekennzeichnet, daß eine auf dem Rohrschaft (20) parallel zur Stoßplatte (21) fixierbare Abdeckplatte (25) vorgesehen ist, welche an den Enden der axialen Vorsprünge (23, 24) der Stoßplatte (21) anliegt und die Öffnungen der Schlitze verschließt.

7. Stoßwerkzeug nach Anspruch 1, dadurch gekennzeichnet, daß am Rand der Abdeckplatten (25) axiale Führungen (27) für die Zungenenden der Einbringleisten (6, 7) angeordnet sind.

8. Abdeckstreifenmagazin zur Durchführung des Verfahrens nach Anspruch 2, dadurch gekennzeichnet, daß eine scheibenförmige, an dem sie zentral durchsetzenden Rohrschaft (20) fixierbare Traganordnung (5) vorgesehen ist, an deren Umfang in gleiche axiale Richtung abstehende Führungskanäle (28) für Abdeckstreifen (30) lösbar befestigt sind, wobei die Zahl und die Winkelabstände der Aufnahmestellen (15) für solche Führungskanäle der Nutenzahl und der Nutteilung des Stators (1) entsprechen.

9. Abdeckstreifenmagazin nach Anspruch 8, dadurch gekennzeichnet, daß die Führungskanäle (28) einen rechteckigen, je einen Abdeckstreifen aufnehmenden Querschnitt (29) haben und daß sie mit je einem Befestigungsfortsatz (7) verbunden und an den Enden abgeschrägt sind.

10. Vorrichtung zur Durchführung des Verfahrens nach Anspruch 2, dadurch gekennzeichnet, daß die Einbringleisten (6, 7), Übertragergabeln (17) und Abdeckstreifen-Führungskanäle (28) so gestaltet sind, daß sie an Traganordnungen (5) mit untereinander gleichen Aufnahmestellen (15) passend befestigbar sind.

11. Traganordnung nach Anspruch 10, dadurch gekennzeichnet, daß eine kreiszylindrische Scheibe (13), die an ihrer Mantelfläche einen umlaufenden Bund (14) aufweist und an dem Einziehschaft (16) oder dem Rohrschaft (20) fixierbar ist, zwischen zwei Lochscheiben (12) koaxial und lösbar eingesetzt ist, welche für die Aufnahme der Befestigungsfortsätze (7) der Einziehleisten, Übertragergabeln und Abdeckstreifen-Führungskanäle deckungsgleiche Lochkränze mit rechteckigen Löchern (15) aufweisen, deren Lochzahl der Nutenzahl und deren Lochteilung der Nutteilung des Stators (1) entspricht.

12. Vorrichtung nach Anspruch 10, dadurch gekennzeichnet, daß die Einziehleisten, Übertragergabeln und Abdeckstreifen-Führungskanäle gleiche querschnittlich rechteckige Befestigungsfortsätze (7) mit Quernut an der radial nach innen gewendeten Seite aufweisen.

13. Einbringleiste zur Durchführung des Verfahrens nach Anspruch 1, dadurch gekennzeichnet, daß an den Außenseiten der Enden der aufgespreizten Zungenabschnitte Haftmittel (9, 10) angeordnet sind, um benachbarte Zungenenden benachbarter Einbringleisten miteinander lösbar zu verbinden.

14. Einbringleiste nach Anspruch 13, dadurch gekennzeichnet, daß an wenigstens einer Zunge (6) am Ende des aufgespreizten Zngenabschnitts eine in Arbeitsstellung der Einbringleiste zur Statorachse weisende Führungsnase (11) angeordnet ist.

FIG.1

FIG.4

FIG.3

FIG.2

EP 0 338 422 A2

FIG.5

FIG.8

FIG.7

FIG.6

# FIG.9

# FIG.10

# FIG.11